Europäisches Patentamt

European Patent Office

Office européen des brevets

(19)

(11) Publication number: **0 009 988**
**B1**

(12) **EUROPEAN PATENT SPECIFICATION**

(45) Date of publication of patent specification: **14.07.82**

(51) Int. Cl.³: **A 21 D 2/14, A 21 D 15/00**

(21) Application number: **79302133.8**

(22) Date of filing: **08.10.79**

(54) Specialty bread product containing preservative and method of preparing same.

(30) Priority: **10.10.78 US 949370**

(43) Date of publication of application:
**16.04.80 Bulletin 80/8**

(45) Publication of the grant of the patent:
**14.07.82 Bulletin 82/28**

(84) Designated Contracting States:
**DE FR GB IT NL SE**

(56) References cited:
**US - A - 3 021 219**

**THE BAKERS DIGEST 40, December 1966, No. 6, pages 50—52 New York, U.S.A.
C. DESA: "Sorbic Acid, its use in yeast-raised bakery products"**

(73) Proprietor: **MONSANTO COMPANY
Patent Department 800 North Lindbergh Boulevard
St. Louis, Missouri 63166 (US)**

(72) Inventor: **Conn, James Frederick
52 Chieftan Drive
St. Louis, Missouri (US)**
Inventor: **Kichline, Thomas Peter
1720 Nichoson Place
St. Louis, Missouri (US)**

(74) Representative: **Lunt, John Cooper et al,
Monsanto House 10-18 Victoria Street
London, SW1H ONQ (GB)**

Courier Press, Leamington Spa, England.

Specialty bread product containing preservative and method of preparing same

## Background of the invention

Research has recently revealed an increasing number of health hazards associated with toxins produced by moulds that may grow on bakery products. The findings of such research has increased consumer concern for food quality. No longer are molds thought to be harmless or that they may even be beneficial. Further, rising costs make discarding of moldy or spoiled bakery products particularly undesirable. Food processors are therefore expanding their efforts to find acceptable ways of preserving food naturalness and freshness while using a minimum number of preservatives.

Accordingly, there is a need in the baking industry for maintaining freshness with better flavor retention, increasing health safety factors, lowering operating costs from fewer returns of products not sold during a period of top quality, making the quality of foods consistent and lowering the energy usage as deliveries can be made at longer time intervals.

In particular, there is a need for a preservative in yeast-leavened bakery products which fulfills the above objectives and yet does not inhibit the action of the yeast in the dough recipe.

## Prior art

The use of sorbic acid and its salts, such as calcium sorbate and potassium sorbate, as preservatives in foods has been known for many years.

For example, it is known that preservatives such as sorbic acid, propionates and vinegar have been used to inhibit mold growth in yeast-leavened bakery products (D. Pfefer, Bakers Digest, April, 1976, pp. 32—37).

Further, the uses and mechanisms of the action of sorbic acid in inhibiting mold and fungus growth in bakery products and many other foods are known, i.e., the greater effectiveness of sorbic acid versus benzoates or propionates; the non-impairment of flavor by sorbic acid and combinations of sorbic acid with propionates [D. Melnick et al., Bakers Digest, October, 1956, pp. 46—54 and 65; Food Research, 21, 133 (1956)].

Mold inhibition in bread has been effected by incorporation of calcium propionate in the dough and thereafter wrapping the bread in paper treated with sorbic acid (Y. Pomeranz et al., Bull. Res. Counc. Israel, Volume 66, 1958, pp. 220—226).

The use of sorbic acid and potassium sorbate in low levels in yeast-raised bakery products such as rolls and English muffins is known. The acid and its salts have been added to the dough or applied to the surface of the baked product (C. DeSa, Bakers Digest, December 1966, Volume 40, No. 6).

US—A—2,997,394 describes the use of fungistats, such as sorbic acid, in yeast-raised baked goods.

US—A—3,692,534 describes a method of preserving food products, including bread dough, by treatment thereof with a combination of materials including sorbic acid and potassium sorbate.

US—A—3,934,045 describes a process for preserving bakery products by adding coarsely crystalline sorbic acid to the dough.

US—A—3,996,386 describes a method for preventing microbial surface deterioration of foods by spraying the surface thereof with a preservative such as sorbic acid and its salts.

It is quite clear that sorbates, i.e. sorbic acid and its salts, have been used as preservatives in foods, particularly in yeast-leavened bakery products and that sorbates have been added to the dough and/or applied to the surface of the baked product. Further, calcium propionate has been added to the dough and potassium sorbate has been applied to the surface of the same baked product (DeSa, Bakers Digest, Volume 40, No. 6, 1966).

## Summary of the invention

In spite of the known prior uses of sorbates in preservation of foods, including bakery products, it has now been surprisingly found that sorbates added to the dough of yeast-leavened bakery products and also applied to the surface of the product either before or after baking act in a synergistic manner to provide enhanced preservative action without inhibiting yeast action. Applicants have found that the addition of sorbates to the dough from which yeast-leavened bakery products are prepared and the surface application of sorbates to the dough or the bakery product results in a product having enhanced taste and appearance and extended shelf life beyond that which could have been predicted from the prior uses of sorbates in either the dough or in surface application.

## Specific embodiments of the invention

As set forth above, it has now been found that the use of sorbates in the dough and applied to the surface of the dough or the finished bakery product of yeast-leavened specialty bread products affords synergistic preservative properties heretofore unrealized. It has especially been found that the use of sorbates both in the dough and on the surface of English muffins affords such synergistic properties.

The present invention is particularly directed to the preservation and enhancement of English muffins but is generally applicable to yeast-leavened products where a certain degree of inhibition of

## 0 009 988

fermentation is acceptable for satisfactory product characteristics. Such products are generally more dense than conventional white pan bread which usually has a density of about 0.16 g/cm$^3$. The more dense specialty breads encompassed by the scope of the invention have densities greater than 0.20 g/cm$^3$ of which English muffins at a density of 0.30 g/cm$^3$ are but one example. Examples of other specialty breads include, but are not limited to, rye, mixed grain, sauerkraut, carrot protein, viking, carobi, cheese, potato, sourdough, french and soya breads.

The preservatives contemplated as falling within the scope of the present invention include sorbic acid, potassium sorbate and calcium sorbate. Especially preferred are sorbic acid and potassium sorbate.

In the present invention it has been found by using sorbates both in the preparation of the dough and applied to the surface thereof or of the bakery product itself, synergistic results are obtained in the enhancement of the appearance and taste of a product and an extension of its shelf life is afforded.

The concentration of sorbic acid in the dough may be from about 0.01% to about 0.5%, especially about 0.1% based on flour weight.

The concentration of potassium sorbate in the bakery dough may be from about 0.01% to about 0.4%, and especially about 0.1%.

The concentration of sorbic acid when applied to the surface may be from about 0.02% to about 0.4%, especially about 0.2%. The concentration of potassium sorbate when applied to the bakery product surface may be from about 0.02% to about 0.4%, especially about 0.2% to about 0.3%. The sorbates are added as a solution in water, ethanol or propylene glycol. The total sorbate concentration (added to dough and sprayed) may be from about 0.05 to about 0.6%, preferably about 0.1% to about 0.3%.

In preparing bakery products in accordance with the present invention, the following description has particular reference to the preparation of English muffins, although it is generally applicable to other specialty yeast-leavened bakery products. Initially the dough formulation is prepared from the desired flour, yeast, dextrose, salt, shortening, water and preservative. The brew formulation, comprising water, yeast, salt and dextrose, may be separately prepared.

The dough is prepared by mixing the flour, shortening and dextrose and thereafter adding the stirred brew and water. The entire mixture is then stirred. The dough is then prepared in pieces suitable for baking e.g. as muffins, and coated with corn meal or similar material and subsequently baked or grilled.

In accordance with the present invention, the muffins are sprayed with sorbates prior to or subsequent to baking, thus affording a bakery product which contains preservative in the dough and on the surface of the baked product.

The incorporation of the preservative into the dough is accomplished by blending the preservative into the dough while mixing to develop the protein into a continuous phase. The preferred method is to add the sorbate and salt when two-thirds of the mixing has been completed.

The application of the preservative to the surface of the bakery product is accomplished by dipping, dusting or spraying. The preferred method is spraying.

The following examples illustrate specific embodiments of the invention but it should be understood that the scope of the invention is not to be restricted thereby.

Example 1

An English muffin dough was prepared from the following formulation:

### Formulation

| Ingredient | Grams | Parts (%) |
|---|---|---|
| Bread Flour | 250.0 | 100.0 |
| Compressed Yeast | 12.5 | 5.0 |
| Dextrose | 5.0 | 2.0 |
| Salt | 2.5 | 1.0 |
| Shortening | 2.5 | 1.0 |
| Water | 228.5 | 91.4 |
| Sorbate | variable | variable |

Additionally, a brew formulation was prepared as follows:

| Ingredients | For one dough |
|---|---|
| Water at 43.4°C. (ml) | 62.5 |
| Yeast (g) | 12.5 |
| Salt (g) | 0.8 |
| Dextrose (g) | 2.9 |
| Total Volume (ml) | 76.5 |

3

The dough was prepared by adding the flour, shortening and 2.10 g dextrose into a mixing bowl. There was then added 76.5 ml of the stirred brew and 135 ml ice water. The brew had previously been fermented until it reached a pH of 3.8, then rapidly chilled to 7.2°C. and stored in a refrigerator until ready to use. The dough mixture was then mixed for one minute at first speed in a Hobart N-50 Mixer with a bowl having a capacity of 4.8 litres, one minute at second speed and ten minutes at third speed. The mixer was then stopped and 1.7 g salt was added, as was sorbate if used. The dough was then mixed for 20 seconds at first speed and four minutes at third speed. During the last two minutes of mixing 28 ml ice water was gradually added.

The dough was then prepared in 65.0 gram pieces which were rounded by hand, coated with corn meal and placed in pans coated with polytetrafluoroethylene.

The doughs were proofed (40°C. and 95% relative humidity) for a period of thirty minutes beginning 11 minutes after the end of the mixing.

The doughs were then dumped into preheated pan pockets, covered with inverted preheated cookie sheets and baked for 4 minutes at 260°C. on one side and then 4 minutes at 260°C. on the other side.

The baked weights of the muffins averaged 56.5 g.

Example 2

The muffins prepared in Example 1 were cooled to room temperature and split if required.

Each muffin was then placed on a Mettler P-120 top-loading balance and the final target weight of muffin and added spray was calculated. Three spray intervals were used to apply a 10% potassium sorbate/water solution to the top side of the muffin. In each interval the Crown Spray-Tool was quickly moved through an 80° arc around the muffin (about 30 cm. out and above muffin) as the spray was directed down on the muffin top and sides. The muffin was turned 120° between intervals so the top and sides were uniformly coated with mist. Then the muffin was turned bottom-side up and sprayed, like the top side, in three more intervals. It is essential that the muffin be completely coated with a fine mist of the spray or mold will start to grow on uncoated spots.

Example 3

Mold spores were prepared by transferring green mold spores from molded bread to yeast-mold agar plates and incubating until the agar was covered with mold. Sterile water was used to wash the spores into a sterile bottle. A 1:10,000 dilution was made via two 1:100 steps and the spore concentration was determined by plate counts.

Black mold spores were prepared similarly. Portions of the 1:10,000 dilutions were combined to provide 150 spores each of the green and black mold per milliliter of inoculum.

The muffins were placed inside a frame (26 cm from a sprayer nozzle) and inclined at about 45°, facing the sprayer. Then, 0.2 ml of inoculum was sprayed on the muffins. This applied about 30 spores each of the black and green mold. The inoculum spray distribution was checked with agar plate counts. The inoculum covered most of the 90 millimeter diameter plates but was more concentrated in the center.

Each muffin was then sealed in a cellophane bag immediately after inoculation. The muffins were stored in a cabinet controlled at 25°C. and 85% relative humidity.

Examples 4—17

The data in the following Table shows the results obtained by incorporated sorbates in both the bread and onto the surface of the product prepared in Example 1.

TABLE

Potassium sorbate spraying and/or sorbic acid in dough of english muffins

| Example No. | 4 | 5 | 6 | 7 | 8 | 9 | 10 |
|---|---|---|---|---|---|---|---|
| % Sorbic Acid in Dough | 0 | 0 | 0 | 0 | 0.12 | 0.24 | 0 |
| % Potassium Sorbate Sprayed | 0 | 0.05 | 0.10 | 0.10 | 0 | 0 | 0.20 |
| Total Sorbate | 0 | 0.05 | 0.10 | 0.10 | 0.12 | 0.24 | 0.20 |
| Avg. Days to Mold Growth | | | | | | | |
| A. Non-Split Muffins | 3.7 | 5 | 4.7 | 5 | 5.7 | 8 | >17[9] |
| B. Split Muffins[8] | 3.9 | — | 5.5[1] | — | 6.3 | — | 7.2[2] |

TABLE continued

| Example No. | 11 | 12 | 13 | 14 | 15 | 16 | 17 |
|---|---|---|---|---|---|---|---|
| % Sorbic Acid in Dough[7] | 0.06 | 0 | 0.12 | 0.12 | 0 | 0.12 | 0.06 |
| % Potassium Sorbate Sprayed | 0.10 | 0.30 | 0.10 | 0.10 | 0.20 | 0.20 | 0.20 |
| Total Sorbate | 0.16 | 0.30 | 0.22 | 0.22 | 0.20 | 0.32 | 0.26 |
| Avg. Days to Mold Growth | | | | | | | |
| A. Non-Split Muffins | >25 | >29 | >28 | >31 | >34 | >39 | >40 |
| B. Split Muffins[8] | 9.5[3] | 10.2[4,5] | >18 | — | — | — | >35[6] |

[1]Mold started inside split—2 of 6 muffins.
[2]Mold started inside split—4 of 5 muffins.
[3]Mold started inside split—2 of 6 muffins.
[4]Mold started inside split—2 of 6 muffins.
[5]Light brown inside split—1 of 6 muffins.
[6]Mold started inside split—1 of 6 muffins
[7]Weight percent of baked muffin.
[8]Muffins were split before spraying with sorbate solution and were inoculated with green and black bread mold after the sorbate spray.
[9]The symbol > indicates one or more of the six muffins in each example did not mold in the indicated number of days when the test was discontinued. The true average would be more than the value shown.

As shown in the Table, Examples 5, 6, 7, 10 and 15 and 12 used only potassium sorbate in the dough. The results are somewhat inconsistent but, in general, the greater the amount of sorbate, above 0.10%, the greater the average days to mold.

Examples 8 and 9 used only sorbic acid in the dough and showed increased preservation on increase in the amount used.

Examples 11, 13, 14, 16 and 17 used sorbates in the dough and as a surface spray. Enhanced preservative effects, at a combined lower concentration, are shown.

It is believed that similar effects would be shown by incorporating potassium sorbate or mixtures thereof with sorbic acid into the dough and by spraying sorbic acid or mixtures thereof with potassium sorbate.

**Claims**

1. A specialty bread, prepared from yeast-leavened dough containing sorbates, characterized by having sorbates on the surface thereof, said sorbates having been applied to the said surface and being selected from sorbic acid, potassium sorbate and calcium sorbate.

2. Bread of Claim 1 characterized in that said sorbates in the dough is sorbic acid and said sorbates applied to the surface thereof is potassium sorbate.

3. Bread of Claim 1 characterized in that it is an English muffin having from about 0.01% to about 0.5% by weight of sorbic acid in the dough and from about 0.02% to about 0.4% by weight potassium sorbate applied to the surface thereof.

4. Bread of Claim 2 characterized in that the concentration of sorbic acid in the dough is from about 0.01% to about 0.5% based on flour weight.

5. Bread of Claim 2 wherein the concentration of potassium sorbate is from about 0.02% to about 0.4%.

6. Bread of Claim 2 wherein the concentration of potassium sorbate is from about 0.2% to about 0.3%.

7. Bread of Claim 1 wherein said sorbates in the dough is potassium sorbate and said sorbates applied to the surface thereof is sorbic acid.

8. A method of preparing a specialty bread having extended shelf-like and enhanced taste and appearance characterized by adding sorbates to yeast-leavened dough and applying sorbates to the surface thereof prior to or subsequent to baking, said sorbates being selected from sorbic acid, potassium sorbate and calcium sorbate.

9. Method of Claim 8 characterized in that a weight concentration of about 0.01% to about 0.5% of sorbic acid is added to the dough and a weight concentration of from about 0.02% to about 0.4% of potassium sorbate is applied to the surface thereof.

10. Method of Claim 9 characterized in that the weight concentration of potassium sorbate is from 0.2% to 0.3%.

**Revendications**

1—Spécialité de pain, préparée à partir de pâte qui a été levée avec une levure, contenant des sorbates, caractérisée en ce qu'elle a des sorbates à sa surfaces, ces sorbates ayant été appliqués à cette surface et étant choisis parmi l'acide sorbique, le sorbate de potassium et le sorbate de calcium.

2—Pain selon la revendication 1, caractérisé en ce que les sorbates dans la pâte sont constitués par l'acide sorbique et les sorbates appliqués à la surface sont constitués par du sorbate de potassium.

3—Pain selon la revendication 1, caractérisé en ce que c'est un petit pain mollet anglais ayant environ 0,01% à environ 0,5% en poids d'acide sorbique dans la pâte et environ 0,02% à environ 0,4% en poids de sorbate de potassium appliqué à sa surface.

4—Pain selon la revendication 2, caractérisé en ce que la concentration d'acide sorbique dans la pâte est environ 0,01% à environ 0,5% en se basant sur le poids de la farine.

5—Pain selon la revendication 2, caractérisé en ce que la concentration de sorbate de potassium est environ 0,02% à environ 0,4%.

6—Pain selon la revendication 2, caractérisé en ce que la concentration de sorbate de potassium est environ 0,2% à environ 0,3%.

7—Pain selon la revendication 1, caractérisé en ce que les sorbates dans la pâte sont formés de sorbate de potassium et les sorbates appliqués à la surface sont formés d'acide sorbique.

8—Procédé de préparation d'une spécialité de pain ayant une durée de conservation en magasin prolongée et un goût et un aspect exaltés, caractérisé en ce qu'on ajoute des sorbates à la pâte qui a été levée avec une levure et en ce qu'on applique des sorbates à la surface avant ou après la cuisson, ces sorbates étant choisis parmi l'acide sorbique, le sorbate de potassium et le sorbate de calcium.

9—Procédé selon la revendication 8, caractérisé en ce qu'une concentration en poids d'environ 0,01% à environ 0,5% d'acide sorbique est ajoutée à la pâte et une concentration en poids d'environ 0,02% à environ 0,4% de sorbate de potassium est appliquée à la surface.

10—Procédé selon la revendication 9, caractérisé en ce que la concentration en poids de sorbate de potassium est 0,2% à 0,3%.

**Patentansprüche**

1. Spezialbrot, hergestellt aus mit Hefe versetztem Teig, der Sorbate enthält, dadurch gekennzeichnet, daß es auf seiner Oberfläche Sorbate aufweist, wobei diese Sorbate auf diese Oberfläche aufgebracht wurden und aus Sorbinsäure, Kaliumsorbat und Calciumsorbat ausgewählt sind.

2. Brot nach Anspruch 1, dadurch gekennzeichnet, daß die genannten Sorbate im Teig Sorbinsäure und die auf seine Oberfläche aufgebrachten genannten Sorbate Kaliumsorbat sind.

3. Brot nach Anspruch 1, dadurch gekennzeichnet, daß es ein englischer Muffin ist, der von etwa 0,01 Gewichtsprozent bis etwa 0,5 Gewichtsprozent Sorbinsäure im Teig und von etwa 0,02 Gewichtsprozent bis etwa 0,4 Gewichtsprozent Kaliumsorbat auf seine Oberfläche aufgebracht aufweist.

4. Brot nach Anspruch 2, dadurch gekennzeichnet, daß die Konzentration der Sorbinsäure im Teig von etwa 0,01% bis etwa 0,5% bezogen auf das Gewicht des Mehls ist.

5. Brot nach Anspruch 2, in dem die Konzentration des Kaliumsorbats von etwa 0,02 bis etwa 0,4% ist.

6. Brot nach Anspruch 2, in dem die Konzentration des Kaliumsorbats von etwa 0,2% bis etwa 0,3% ist.

7. Brot nach Anspruch 1, in dem die genannten Sorbate im Teig Kaliumsorbat und die auf seine Oberfläche aufgebrachten Sorbate Sorbinsäure sind.

8. Verfahren zur Herstellung eines Spezialbrots mit verlängerter Regal-Lebensdauer und verbessertem Geschmack und Aussehen, gekennzeichnet durch die Zugabe von Sorbaten zu einem mit Hefe versetzten Teig und Aufbringen von Sorbaten auf seine Oberfläche vor oder nach dem Backen, wobei diese Sorbate aus Sorbinsäure, Kaliumsorbat und Calciumsorbat ausgewählt sind.

9. Verfahren nach Anspruch 8, dadurch gekennzeichnet, daß eine Gewichtskonzentration von etwa 0,01% bis etwa 0,5% von Sorbinsäure zu dem Teig zugegeben wird und eine Gewichtskonzentration von etwa 0,02 bis etwa 0,4% von Kaliumsorbat auf seine Oberfläche aufgebracht wird.

10. Verfahren nach Anspruch 9, dadurch gekennzeichnet, daß die Gewichtskonzentration des Kaliumsorbats von 0,2% bis 0,3% ist.